# EUROPEAN PATENT APPLICATION

(11) **EP 0 653 661 A1**
(43) Date of publication of application: **17.05.1995**
(21) Application number: 94308080.4
(22) Date of filing: 02.11.1994
(51) Int. Cl.: G02F 1/09

(54) **Optical isolator with reduced polarization mode dispersion**

(30) Priority: 12.11.1993 US 151610
(71) Applicant: AT&T Corp., New York, NY 10013-2412 (US)
(72) Inventor: Emkey, William Lewis, Bethlehem, Pennsylvania 18017 (US)
(74) Representative: Johnston, Kenneth Graham

(57) **Abstract**

An optical isolator (10) includes first and second groups (10.1, 10.2) of optical elements arranged in tandem on a common axis (13). Each group comprises a pair of birefringent wedges (14.1, 16.1; 14.2, 16.2) and a non-reciprocal rotator (12.1, 12.2). The design includes means (16.1, 14.2; 38) for interchanging the identities of the ordinary and extraordinary rays between the two groups. In one embodiment, the output wedge (16.1) of the first group and the input wedge (14.2) of the second group are designed so that their C-axes are essentially perpendicular. In another embodiment, a polarization rotator (38) is disposed between the two groups. This design effectively reduces the propagation delay between the ordinary and extraordinary rays.

## Description

### Background of the Invention

The present invention relates to an optical isolator designed to reduce polarization mode dispersion; i.e., to reduce the propagation delay between the ordinary and extraordinary rays.

Reflections in optical systems often generate noise and optical feedback which may degrade the performance of various system components, particularly signal sources such as semiconductor lasers. Therefore, the ability to optically isolate lasers and other sensitive components from these reflections is often critical to the performance of the system. In general, a conventional optical isolator comprises a non-reciprocal rotator (e.g., 45° Faraday rotator encased within a bias magnet) disposed between a pair of polarization selectors (e.g., linear polarizers, birefringent plates, or birefringent wedges). Input signals passing through the isolator in the transmitting, forward direction are essentially fully coupled through the polarization selector and Faraday rotator to the output device (e.g., fiber). However, the polarization of reflected signals passing through the isolator in the reflecting, reverse direction is rotated such that essentially none of the reflections are coupled back into the signal source.

A common isolator design includes a Faraday rotator slab disposed between a pair of birefringent wedges. See, for example, W. Emkey et al., Proc. OFC, Abstract THF2 (1989). Under certain conditions, this design is effective in reducing the polarization dependence of the isolator. However, because the wedges are birefringent, the input beam is split into ordinary rays (o-rays) and extraordinary rays (e-rays), which have orthogonal polarizations. The o-rays and e-rays travel over paths of different length through the isolator and, hence, are delayed relative to one another. This phenomenon is known as polarization mode dispersion (PMD), where the term *mode* refers to the polarization state of the beam. Although the magnitude of this delay may be only on the order of a few picoseconds, for some applications it may still be a problem.

A need remains, therefore, for an optical isolator which not only is polarization independent, but also has reduced PMD.

### Summary of the Invention

Reduced polarization mode dispersion in an optical isolator is achieved in an arrangement which includes first and second optical element groups located in tandem along a common axis and means for interchanging the identity of the e-rays and o-rays between the first and second groups. In one embodiment the interchange is accomplished by making the C-axis of the input element of the second group essentially perpendicular to the C-axis of the output element of the first group. In an alternative embodiment, the interchange is accomplished by positioning a polarization rotator between the element groups.

### Brief Description of the Drawings

The invention, together with its various features and advantages, can be readily understood from the following more detailed description taken in conjunction with the accompanying drawing, in which:
FIG. 1 is a schematic of an optical isolator in accordance with one embodiment of the invention in which the C-axis of the output wedge of the first isolator element group is essentially perpendicular to the C-axis of the input wedge of the second element group.
FIG. 2 is a schematic of the wedges used in FIG. 1 showing, in particular, their C-axis orientations; and
FIG. 3 is a schematic of an isolator in accordance with an alternative embodiment of the invention in which a polarization rotator is positioned between isolator element groups.

The figures are not drawn to scale, and the various angles, dimensions, and light ray directions are exaggerated in order to improve clarity. In particular, the refraction of the light rays at the interior surfaces of the element groups is omitted for simplicity.

### Detailed Description

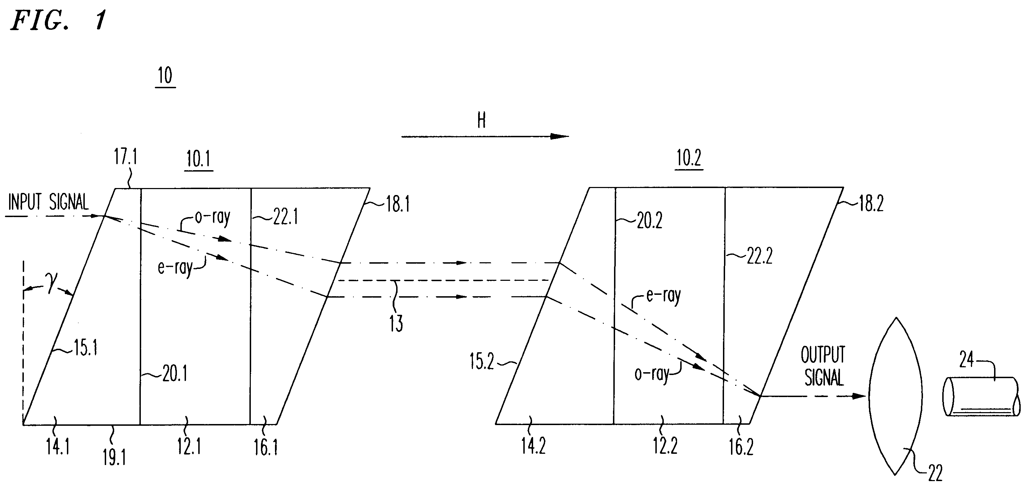

FIG. 1 illustrates an optical isolator comprising first and second element groups 10.1 and 10.2 coaxially disposed along a common axis 13 and means for interchanging the identity of e-rays and o-rays between the groups. Any propagation delay introduced by the birefringent elements in the first group is undone when the interchanged rays traverse the birefringent elements in the second group.

Each group illustratively includes three basic components: a pair of birefringent (e.g., rutile, calcite) input and output wedges 14.1, 16.1 and 14.2, 16.2 and a non-reciprocal (e.g., Faraday) rotator slab 12.1, 12.2 (e.g., a thin film of a garnet material) located between the wedges. The oblique surfaces 15.1, 15.2, 18.1 and 18.2 of the wedges are all essentially parallel to one another.

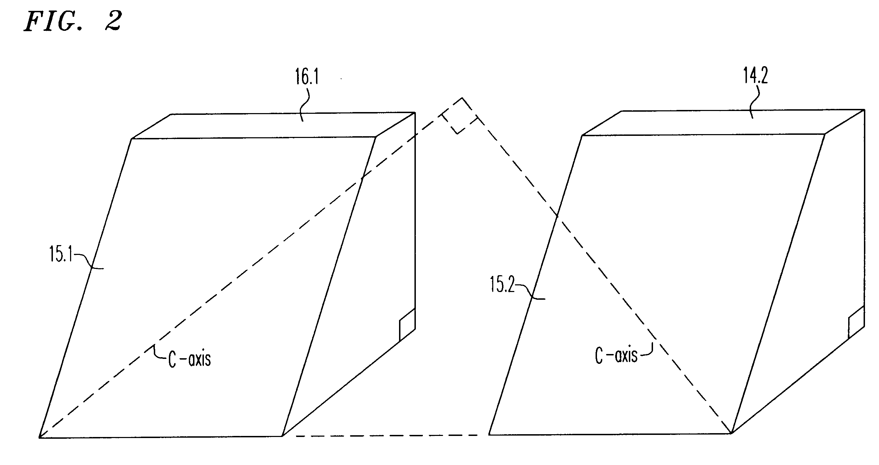

In accordance with one embodiment of the invention, the interchanging means involves designing groups 10.1 and 10.2 so that, as shown in FIG. 2, the C-axis of the output wedge 16.1 of the first group is essentially perpendicular to the C-axis of the input wedge 14.2 of the second group. As depicted, the C-axis of each wedge lies in the plane of the oblique surfaces 15.1, 15.2. In addition, consistent with standard design of isolators of this type, the C-axes of input and output wedges of each group are oriented at 45° to one another. Thus, the C-axes of wedges 14.1 and 16.1 are at 45° to one another, and the C-axes of wedges 14.2 and 16.2 are likewise oriented at 45° to one another.

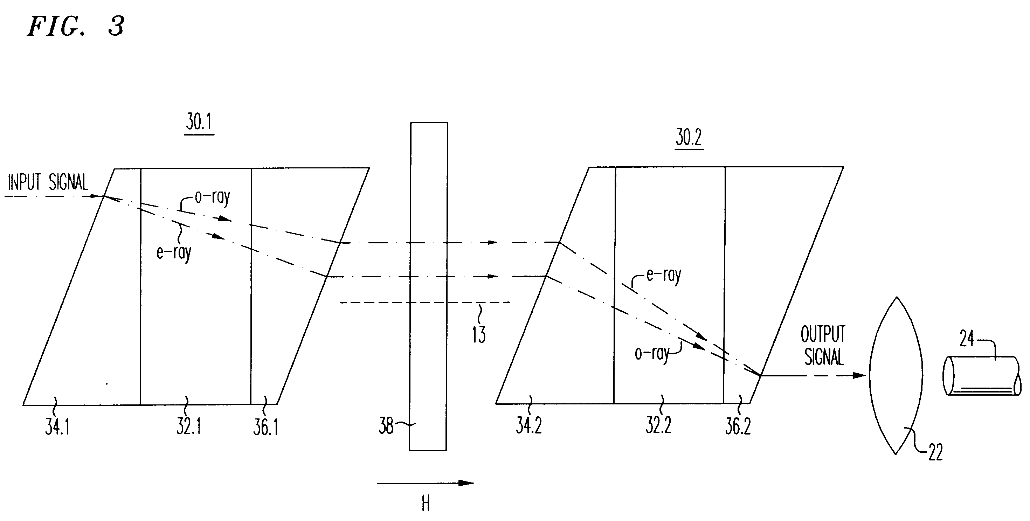

An alternative embodiment of the invention is depicted in FIG. 3. In this design the interchanging means includes a polarization rotator which rotates a given polarization state from an orientation aligned parallel (perpendicular) to a C-axis in the first group to an orientation perpendicular (parallel) to a C-axis of the second group. For example, the rotator may comprise a birefringent half-wave plate 38 which has its C-axis oriented at approximately 45° to the polarization directions of the o-rays and e-rays. Each element group 30.1 and 30.2 includes a Faraday rotator slab 32.1, 32.2 disposed between a pair of birefringent wedges 34.1, 36.1 and 34.2, 36.2, respectively. Within each group the C-axis of the wedges 34.1, 36.1 and 34.2, 36.2 are oriented at approximately 45° to one another, as is well known in the art. In operation, plate 38 rotates a given polarization state from an orientation parallel (perpendicular) to the C-axis of wedge 36.1 to an orientation perpendicular (parallel) to the C-axis of wedge 34.2.

Although FIGS. 1 and 3 show that the input and output beams exhibit net walk-off, they do not exhibit relative walk-off between the o-rays and e-rays. That is, in the output signal the o-rays and e-rays are coaxial. These designs, therefore, advantageously exhibit reduced polarization dependent loss (PDL) as well as reduced PMD. PDL is related to the fact that non-coaxial rays typically enter an aperture at different angles and hence have different coupling coefficients to that aperture (e.g., core of a fiber).

In addition, the use of two isolator element groups in tandem increases the isolation as compared to a single stage device, yet does not significantly increase the insertion loss.

In practice, the actual operation of these isolators typically requires a permanent magnet to generate the magnetic field H parallel to axis 13 and may include lensing elements and antireflection coatings, all of which are well known in the art. For the sake of clarity, the magnets and coatings are not shown and are not considered as necessary for an understanding of the operation of the isolator in accordance with the teachings of the present invention. The lensing elements are depicted schematically by lens means 22 which focuses the output signal into an aperture such as the core of optical fiber 24.

It is to be understood that the above-described arrangements are merely illustrative of the many possible specific embodiments which can be devised to represent application of the principles of the invention. Numerous and varied other arrangements can be devised in accordance with these principles by those skilled in the art without departing from the spirit and scope of the invention. In particular, the invention contemplates that the element groups may take on other geometric configurations besides the two-wedge, single slab design depicted. Moreover, although simplicity and cost dictate that the wedges are made of the same birefringent materials, it is also possible to utilize different materials in different wedges. Under such circumstances, the thicknesses of the wedges may have to be different from one another to compensate for the different birefringence each material exhibits. We note here an approximation: the latter discussion assumes that the wedge angle γ is typically so small (e.g., 4-5°) that the wedge thickness does not vary significantly from one end to the other (e.g., from end 17.1 to 19.1, FIG. 1) and hence can be reasonably approximated by a single value of thickness. In addition, we observe that the body identified herein as a *wedge* need not have a cross-section in the shape of a right triangle (whether truncated as in FIGS. 1-3, or not) or in the shape of any triangle for that matter. The important geometric features of each such body are the two non-parallel surfaces traversed by the light beam (e.g., surfaces 15.1, 20.1 of wedge 14.1; surfaces 18.1, 22.1 of wedge 16.1; surfaces 15.2, 20.2 of wedge 14.2; and surfaces 18.2, 22.2 of wedge 16.2).

Finally, although it would complicate the design, element groups 10.1 and 10.2 could be traversely offset from one another such that they would not share a common geometric axis 13 of their physical elements. However, the groups would have comparable geometric axes parallel to one another. Positioned in this way, they would still fall within the scope of invention because the portion of the element groups traversed (*seen*) by the light beams would still lie on along a common light beam axis between the input and output.

## Claims

1. An optical isolator (10) comprising:
first and second groups (10.1, 10.2) of optical elements arranged in tandem along a common axis (13), CHARACTERIZED IN THAT
each of said groups has birefringent input and output elements (14.1, 16.1; 14.2, 16.2), said first and second groups being adapted to receive a light beam which tends to split into ordinary and extraordinary rays, and
means (16.1, 14.2; 38) for interchanging the identity of said ordinary rays with said extraordinary rays between said first and second groups.

2. The isolator of claim 1 wherein at least one said groups comprises an optical isolator.

3. The isolator of claim 1 wherein each of said groups comprises an optical isolator.

4. The isolator of claim 1 wherein said interchanging means comprises said output element of said first group and said input element of said second group having their C-axes essentially perpendicular to one another.

5. The isolator of claim 4 wherein said input and output elements have essentially identical physical shapes.

6. The isolator of claim 4 wherein said input and output elements each comprises a birefringent wedge, and wherein said groups each comprise a non-reciprocal rotator slab disposed between said input and output wedges.

7. The isolator of claim 4 wherein said input and output elements each comprises a birefringent wedge, and wherein the C-axes of the input and output wedges of each of said groups are oriented at an angle of approximately 45° to one another.

8. The isolator of claim 1 wherein said interchanging means comprises a polarization rotator disposed between said groups.

9. A dual isolator comprising:
a first group of elements comprising a first pair of input and output birefringent wedges and a first non-reciprocal rotator slab disposed on a common axis and between said first pair of wedges, and CHARACTERIZED BY
a second group of elements comprising a second pair of input and output birefringent wedges and second non-reciprocal rotator slab disposed on said axis and between said second pair of wedges,
said input and output wedges each having oblique surfaces which are essentially parallel to one another,
said output wedge of said first pair and said input wedge of said second pair having their C-axes approximately perpendicular to one another, and said input and output wedges in each pair having their C-axes at approximately 45° to one another.

10. A dual isolator comprising:
a first group of elements comprising a first pair of input and output birefringent wedges and a first non-reciprocal rotator slab disposed on a common axis and between said first pair of wedges, CHARACTERIZED BY
a second group of elements comprising a second pair of input and output birefringent wedges and second non-reciprocal rotator slab disposed on said axis and between said second pair of wedges,
said input and output wedges each having oblique surfaces which are essentially parallel to one another,
said input wedge of said first pair being adapted to receive an input beam and being effective to split said beam into ordinary and extraordinary rays which tend to propagate through said isolator over paths of different length,
said input and output wedges in each pair having their C-axes at approximately 45° to one another, and
a birefringent half-wave plate disposed between said groups, the C-axis of said plate being oriented at approximately 45° to the polarization directions of said ordinary and extraordinary rays.
